# EUROPEAN PATENT APPLICATION

(11) **EP 4 817 977 A1**
(43) Date of publication of application: **07.10.2026**
(21) Application number: 25167504.7
(22) Date of filing: 31.03.2025
(51) Int. Cl.: B60W 30/09, B60W 30/095, B60W 40/04, B60W 60/00

(54) **METHODS AND SYSTEMS FOR MAKING DECISIONS IN AUTOMATED DRIVING SYSTEMS**

(71) Applicant: Zenseact AB, 417 56 Gothenburg (SE)
(72) Inventor: SELVARAJ, Yuvaraj, 435 31 MÖLNLYCKE (SE); HARDÅ, Peter, 423 49 TORSLANDA (SE); ÅSLJUNG, Daniel, 417 56 GÖTEBORG (SE)
(74) Representative: Zacco Sweden AB

(57) **Abstract**

Computer-implemented methods and related aspects for planning a driving task for an automated driving system of a vehicle. The method comprises obtaining perception data regarding the surrounding environment, obtaining the host vehicle's current state (including pose and velocity), predicting how both the vehicle and its surroundings will evolve over time based on a selected driving policy, determining a threshold velocity for the upcoming driving manoeuvre, verifying the validity of dynamic assumptions used in the predictions (assigning scores to each assumption), and controlling the vehicle to execute a driving task in accordance with a selected driving policy that is selected in view of the current velocity and the verified assumptions.

## Description

### TECHNICAL FIELD

The disclosed technology relates to automated driving system. In particular, but not exclusively the disclosed technology relates to methods and systems for planning a driving task to be executed by an automated driving system (ADS) of a vehicle.

### BACKGROUND

Automated driving systems have garnered significant attention in recent years, with increasing levels of autonomy being deployed in consumer vehicles. These systems rely on an array of sensors, computing platforms, and control algorithms to perceive the vehicle's surroundings, plan driving manoeuvres, and execute corresponding actions in real time. As the industry advances from driver-assist functionalities (e.g., adaptive cruise control and lane-keeping) toward higher levels of autonomy (Levels 3, 4, or 5 according to SAE International standards), safety and reliability remain paramount objectives.

One of the core challenges in the development of automated driving systems lies in the action planning process. This process may for example involve interpreting sensor data, predicting the behaviour of surrounding traffic, and determining the best course of action, for executing an upcoming driving task, to ensure the vehicle operates safely. While conservative planning strategies can mitigate risks and help reduce the likelihood of accidents, an overly cautious approach may lead to passenger discomfort, low throughput in traffic, and potentially frustrating driving experiences for both occupants and other road users.

Conversely, more assertive approaches to decision-making may deliver a smoother, more human-like driving style in many scenarios, thereby enhancing user acceptance and comfort. However, these approaches can also introduce a higher risk if the planning algorithm is overly optimistic about environmental conditions or the behaviour of other road users. This trade-off between conservative and assertive planning highlights the need for action planning methods that adapt dynamically to changing road conditions, traffic behaviour, and user preferences. Achieving high efficiency/performance while still fulfilling safety targets remains a key challenge.

Despite recent advancements, there is still a need for improved planning methods that can evaluate multiple possible actions, weigh the associated risks and rewards, and select manoeuvres that increase safety without sacrificing user comfort in a computationally efficient manner.

### SUMMARY

The herein disclosed technology seeks to mitigate, alleviate or eliminate one or more of the above-identified deficiencies and disadvantages in the prior art to address various problems relating to balancing safety and usability/efficiency of Automated Driving Systems.

Various aspects and embodiments of the disclosed technology are defined below and in the accompanying independent and dependent claims.

A first aspect of the disclosed technology comprises a computer-implemented method for planning a driving task for an automated driving system (ADS) of a vehicle. The computer-implemented method comprises obtaining perception data indicative of a current state of the surrounding environment of the vehicle from a perception system of the vehicle, and obtaining a current state of the vehicle. The current state of the vehicle comprises a current pose of the vehicle and a current velocity of the vehicle. The method further comprises predicting a future state of the vehicle at a future point in time based on the current state of the vehicle, the current state of the surrounding environment, and a manoeuvring plan for executing an upcoming driving task in accordance with a first driving policy out of a set of driving policies. Further, the method comprises predicting a future state of the surrounding environment at the future point in time based on the current state of the surrounding environment, a set of static assumptions of the surrounding environment, and a set of dynamic assumptions of the surrounding environment. Moreover, the method comprises determining a threshold velocity for the vehicle for the upcoming driving task for the ADS based on the current state of the vehicle, the current state of the surrounding environment, the predicted future state of the vehicle at the future point in time, and the predicted future state of the environment at the future point in time. The method further comprises verifying a validity of the set of dynamic assumptions used to predict the future state of the surrounding environment based on historical perception data from the perception system of the vehicle and/or based on information received from a remote server. Each dynamic assumption of the set of dynamic assumptions is assigned a score based on the verification, the assigned score of a dynamic assumption indicating the validity of that dynamic assumption. The method further comprises controlling the vehicle so to execute the upcoming driving task in accordance with a driving policy that is selected out of the set of driving policies, wherein the driving policy for executing the upcoming driving task is selected in dependence of a current velocity of the vehicle in relation to the determined threshold velocity and in dependence of the validity of the set of dynamic assumptions.

A second aspect of the disclosed technology comprises a computer program product comprising instructions which, when the program is executed by a computer, causes the computer to carry out the method according to any one of the embodiments disclosed herein. With this aspect of the disclosed technology, similar advantages and preferred features are present as in the other aspects.

A third aspect of the disclosed technology comprises a (non-transitory) computer-readable storage medium comprising instructions which, when executed by a computer, causes the computer to carry out the method according to any one of the embodiments disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for planning a driving task for an automated driving system (ADS) of a vehicle, the system comprising one or more processors and one or more memory storage areas comprising program code. The one or more memory storage areas and the program code are configured to, with the one or more processors, cause the system to obtain perception data indicative of a current state of the surrounding environment of the vehicle from a perception system of the vehicle and obtain a current state of the vehicle. The current state of the vehicle comprises a current pose of the vehicle and a current velocity of the vehicle. The one or more memory storage areas and the program code are configured to, with the one or more processors, cause the system to predict a future state of the vehicle at a future point in time based on the current state of the vehicle, the current state of the surrounding environment, and a manoeuvring plan for executing an upcoming driving task in accordance with a first driving policy out of a set of driving policies. The one or more memory storage areas and the program code are configured to, with the one or more processors, cause the system to predict a future state of the surrounding environment at the future point in time based on the current state of the surrounding environment, a set of static assumptions of the surrounding environment, and a set of dynamic assumptions of the surrounding environment. The one or more memory storage areas and the program code are configured to, with the one or more processors, cause the system to determine a threshold velocity for the vehicle for the upcoming driving task for the ADS based on the current state of the vehicle, the current state of the surrounding environment, the predicted future state of the vehicle at the future point in time, and the predicted future state of the environment at the future point in time. The one or more memory storage areas and the program code are configured to, with the one or more processors, cause the system to verify a validity of the set of dynamic assumptions used to predict the future state of the surrounding environment based on historical perception data from the perception system of the vehicle and/or based on information received from a remote server. Each dynamic assumption of the set of dynamic assumptions is assigned a score based on the verification, the assigned score of a dynamic assumption indicating the validity of that dynamic assumption. The one or more memory storage areas and the program code are configured to, with the one or more processors, cause the system to control the vehicle so to execute the upcoming driving task in accordance with a driving policy that is selected out of the set of driving policies, wherein the driving policy for executing the upcoming driving task is selected in dependence of a current velocity of the vehicle in relation to the determined threshold velocity and in dependence of the validity of the set of dynamic assumptions.

A fifth aspect of the disclosed technology comprises a vehicle comprising a system according to any one of the embodiments of the fourth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that a more efficient and better performing ADS may be realized.

An advantage of some embodiments is that a good usability/efficiency when executing driving tasks by an ADS without compromising on safety may be achieved.

An advantage of some embodiments is that an improved driving policy selection methodology may be provided, thereby enabling the ADS to more dynamically adapt its driving policy in traffic scenarios.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for planning a driving task for an automated driving system (ADS) of a vehicle in accordance with some embodiments.
Fig. 2 is a schematic block diagram representation of a system for planning a driving task for an automated driving system (ADS) of a vehicle in accordance with some embodiments.
Figs. 3a-3c is a series of schematic top-view illustrations of a traffic scenario exemplifying a verification of a dynamic assumption in accordance with some embodiments.
Fig. 4 is a vehicle comprising a system for planning a driving task for an automated driving system (ADS) of the vehicle in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

As used herein, the phrase "indicative of [X]" means that the relevant signal or data includes, references, or otherwise conveys information from which [X] can be determined, inferred, or derived, either on its own or in combination with other accessible data sources. This does not require that the signal or data explicitly encode every aspect or parameter of [X]. Rather, the signal may simply provide sufficient correlation, reference, or pointer to enable a recipient (e.g., an automated driving system or related component) to ascertain [X] by consulting additional data, knowledge, or processes.

### Overview

As mentioned, automated driving systems have garnered significant attention in recent years. However, full realization of the potential benefits of these technologies largely depends on the acceptance and adaptation by the users. An aspect in this context is the challenge of achieving a balance between safety on one hand and performance and efficiency on the other hand. To address this challenge, embodiments herein propose a novel solution that improves the planning process of various ADS functions by introducing a metric that can be calculated in run-time to assess a validity of the assumptions made in the prediction model that the planning process relies upon for determining a best course of action for the vehicle.

In more detail, many automated driving systems of today can be conceptually simplified as an architecture with 3 subsystems, namely a sensing subsystem, a planning subsystem, and an acting subsystem. The sensing subsystem makes use of various sensors to perceive the environment and fuses the data to provide information about static objects, dynamic objects, road geometry, and so forth. The planning subsystem uses the information from the sensing subsystem to decide if, when, and how to act. The acting subsystem executes the decisions from the planning subsystem using the various actuators of the vehicle (acceleration, braking, and steering).

An important task of the planning subsystem is to assess the traffic situation in real-time based on an output from the sensing subsystem and decide a safe manoeuvre to be executed based on various thresholds (e.g., threat metrics, safety margins, etc). Such decision-making processes often involve predicting a future state of the system (i.e., the host vehicle) given the information in the current state (of the host vehicle and the environment) subject to certain assumptions about the capabilities of the host vehicle and assumptions about the environment (e.g., behaviour of other road users or participants in the traffic situation). There are several existing solutions for these decision-making processes with varying prediction methods, prediction horizons, decision thresholds, and assumption models. However, a significant challenge in all of these decision-making processes is to achieve a good balance between safety and performance (e.g., in terms of comfort, user experience, computational efficiency, etc.).

To further detail the problem, one can consider a host vehicle equipped with an ADS function intended to manoeuvre the vehicle autonomously on a highway road that fulfils its operational design domain (ODD). In such a setting, at current time (t₀), the sensing subsystem provides information about static and dynamic objects such as type, position, velocity, detection accuracy, etc. Furthermore, fused information such as area definitions (e.g., free-space area estimations) may also be provided. However, since there are known sensor limitations in terms of accuracy, detection range, etc., as well as limitations in the acting subsystem's capabilities such as the maximum braking ability, it may be necessary to plan the driving task with some precaution to guarantee safety should an adverse situation occur.

To this end, it is herein proposed to calculate a so-called "safe velocity" (denoted as *v_{safe}*) as an upper threshold for the host vehicle when planning the driving task. In addition to the available information from the sensing subsystem at t₀ (which at least includes the current state of the environment and the current state of the host vehicle), the calculation of *v_{safe}* is further dependent a predicted future state of the host vehicle and a predicted future state of the environment. Accordingly, *v_{safe}*(*t*) can be calculated as: ${v}_{safe} \left(t\right) = f \left({x}_{host}\left(t\right),{x}_{env}\left(t\right),{\hat{x}}_{host}\left({t}_{n}\left|t\right.\right),{\hat{x}}_{env}\left({t}_{n}\left|t\right.\right)\right)$ (1) where *xₕₒₛₜ*(*t*) is a vector denoting the state of the host vehicle at time *t, xₑₙᵥ*(*t*) is a vector denoting the state of the environment as perceived by the sensing subsystem at time *t, x̂ₕₒₛₜ*( *tₙ* | *t* ) is a vector denoting the prediction of state of the host vehicle at time tₙ, given the information at time *t* with *n* as the prediction horizon (i.e., *tₙ = t + n),* and *x̂ₑₙᵥ*( *tₙ* | *t* ) is a vector denoting the prediction of state of the environment at time *tₙ*, given the information at time *t,* with *tₙ = t + n.*

In more detail, the future state of the vehicle (*x̂ₕₒₛₜ*( *tₙ* | *t* )) and the future state of the environment (*x̂ₑₙᵥ*( *tₙ* | *t* )) are predicted using various modelled assumptions such as for example, assumptions about the behaviour of the host vehicle, assumptions about the behaviour of detected objects, and assumptions about potential risks in unobserved or occluded areas.

The validity of these assumptions plays a large role in achieving a balance between a cautious and safe driving policy and an efficient and practical driving policy. Overly conservative assumptions that overestimate the risk of the driving task might result in excessive caution and overly-defensive driving, resulting in user dissatisfaction, while overly optimistic assumptions and under-estimate the risk of the driving task might result in aggressive and potentially dangerous driving, also resulting in user dissatisfaction.

To further exemplify the impact of the validity of the above-mentioned assumptions, one can consider a planning subsystem with two software components responsible for planning an executing of an upcoming driving task: a nominal planner and a safety/emergency planner. In short, one can say the nominal planner is responsible for performing nominal driving tasks with limited actuation capabilities, the safety planner is responsible for guaranteeing safety during emergency situations. Thus, the safety planner works with increased actuation capabilities compared to the nominal planner and has the authority to override nominal planner's output if necessary to guarantee safety.

Further, one can consider a simple decision-making algorithm (as defined in (2) below) to be implemented by the planning subsystem for deciding between whether to execute the action plan as output by the nominal planner (denoted as *aₙ*) or the plan as output by the safety planner (denoted as *aₛ*), using the above-referenced approach with a safe-velocity acting as a decision threshold. $if \hat{v} \left(t\right) \leq {v}_{safe} \left(t\right) then a = {a}_{n} else a = {a}_{s}$ (2)

Here, *v̂*(*tₙ*) is the predicted host vehicle velocity at time *tₙ* and *a* is the host vehicle acceleration that is communicated from the planning subsystem to be executed by acting subsystem. Thus, the decision-making algorithm (2) enforces the calculated safe-velocity (*v_{safe}*).

Even in the simplified decision-making algorithm above it is quite evident that an incorrect or overly conservative assumption made in the calculation of *v_{safe}* will result in an underperforming driving policy in terms of user experience since it may enforce a very conservative driving policy unnecessarily.

In order to address the challenge of achieving a good balance between safety and "usability" in the decision-making mentioned above, embodiments herein propose to improve the decision-making algorithm by introducing a metric that can be calculated at run-time to assess the validity of the assumptions made in the prediction model and thereby achieve a necessary balance between safety and efficient performance.

In more detail, it is herein proposed to split the assumptions used in the predictions of the future state of the environment into two categories, a set of static assumptions that is/are independently validated in design-time and a set of dynamic assumptions that is/are validated in run-time. Then, the validity of the dynamic assumptions is used as an input parameter for deciding on what type of driving policy to implement for executing the driving task, where the driving policies can vary from very cautious (e.g., enforcing low speed and defensive driving) to very permissive (e.g., allowing for high speeds and more aggressive driving). The runtime validation of the assumptions is made based on historical sensor data available from the host vehicle (e.g. sensor data from t_{-N}, ..., t₋₁, tₒ can be used to check whether the observed behaviour matches the assumed behaviour) or based on aggregated information from a fleet of vehicles that can be provided by a fleet management server.

Accordingly, using this approach with run-time verification of the dynamic assumptions, (2) above can be rewritten as follows in some embodiments. $if \left(\hat{v}\left(t\right)\leq {v}_{safe}\left(t\right)&av\geq {av}_{limit}\right) then a = {a}_{n} else a = {a}_{s}$ (3)

Here, *av* is the measure of assumption validity and *avₗᵢₘᵢₜ* is the validity threshold, which can be set on a scale of 0 to 1, with 1 being the ideal case where the assumed behaviour matches reality. The measure to calculate *av* is tailored to the specific assumption made. For instance, an assumption about a velocity of car driving in an adjacent lane was made, i.e., *v_{car}*(*tₙ*) > *vₗᵢₘᵢₜ* is made in the prediction of *x̂ₑₙᵥ* ( *tₙ* | *t* ) in calculating *v_{safe}* according to (1). However, if historical sensor data (i.e., sensor measurements made of that car at preceding time instances) indicate that the velocity of that car is much less than *vₗᵢₘᵢₜ,* i.e., *v_{car}*(*t₋ₙ*) ... *< v_{car}*(*t*₋₁) *< v_{car}*(*t*) « *vₗᵢₘᵢₜ*, then the likelihood of that assumption being valid (i.e., close to 1 using the example above) is low. Thus, one can conclude that the calculation of *v_{safe}* was based on an erroneous assumption and knowing this, one can modify or remove that assumption and make a new prediction of the future state of the environment and re-calculate *v_{safe}* to eventually allow for a more permissive driving policy. The rationale behind the allowability of a more permissive driving policy (e.g., allowing for an exceedance of *v_{safe}*) would be that the calculation of *v_{safe}* has to be made with conservative assumptions (over-estimating risk in order to fulfil safety requirements) and if those assumptions are deemed to be invalid, then the calculation of *v_{safe}* and enforcement of that as a threshold would be too conservative and impede performance. Thus, by including this feedback loop, one is provided with the opportunity to adjust the calculation of *v_{safe}* using less conservative assumptions (albeit valid) and therefore get a higher *v_{safe}* and a more permissive driving policy.

### Definitions

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an ADS aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

The term "perception data" may be understood as the information gathered by sensors and other technologies that are used by ADS-equipped vehicles to detect and interpret their environment. This includes data collected from cameras, LiDAR, radar, ultrasonic devices, and other sensors that help the vehicle "perceive" its surroundings and make decisions based on that information. The perception data collected by the vehicle may include the position, speed, and direction of nearby objects, position and type of road markings, position and type of traffic signs, and other relevant information. This data may then be processed by the vehicle's onboard computer to help it make decisions on steering, acceleration, braking, and other actions necessary to safely navigate the environment. Accordingly, the term "perception" data may refer to "surroundings assessment" data, "spatial perception" data, "processed sensory" data and/or "temporal dependencies" data, whereas perception "data" may refer to perception "information" and/or "estimates". The term "obtained" from a perception module or perception system, on the other hand, may refer to "derived" from a perception model and/or "based on output data" from a perception module or system. whereas perception module/system configured to "generate the set of perception data" may refer to perception module/system adapted and/or configured to "estimate the surroundings of said vehicle", "estimate at least a portion of surroundings of said vehicle", "determine surroundings of said vehicle", "interpret sensory information relevant for the autonomous manoeuvring of said vehicle", and/or "estimate surroundings of said vehicle and make model predictions of future states of the surroundings of said vehicle".

The surrounding environment of the host vehicle (or ego-vehicle) can be understood as a general area around the host vehicle in which objects (such as other vehicles, landmarks, obstacles, etc.) can be detected and identified by vehicle sensors (radar, LiDAR, cameras, etc.), i.e. within a sensor range of the host vehicle.

In the present context, a "sensor" or "sensor device" may be understood as to a specialized component or system that is designed to capture and gather information from the vehicle's surroundings or information about the vehicle itself. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in automated driving systems for perceiving the environment include LiDAR (Light Detection and Ranging), Radar, Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

In the context of an automated driving system, the phrase "current state of the surrounding environment" can be understood to encompass any real-time information or conditions external to the vehicle that may affect its operation. This includes, but is not limited to, the position, speed, and trajectory of nearby vehicles; the presence and movement of pedestrians or other objects; roadway characteristics (such as lane markings, signage, intersections, and surface conditions); traffic lights and other signalling devices; weather conditions (including precipitation, visibility, and ambient lighting); and any other external factors relevant to the decision-making and control processes of the automated driving system.

As used herein, the term "current state of the vehicle" may be understood as real-time information describing the operational condition of the host (or ego) vehicle. At a minimum, this includes the vehicle's pose (e.g., position and orientation in a specified coordinate system) and its velocity. The term may also encompass additional parameters such as acceleration, yaw rate, steering angle, or any other data relevant to characterizing the vehicle's real-time dynamics and control status. Moreover, it should be noted that the terms "velocity" and "speed" are used interchangeably in the present application such that the term "velocity" as well as the term "speed" may be defined as a scalar (defining the time rate at which an object is moving) or a vector (defining the rate and direction of an object's movement).

As used herein, the term "manoeuvring plan" may be understood as to an output generated by a planning subsystem (e.g., a path or trajectory planner) of an automated driving system, defining the intended future movement of the host vehicle. In particular, a manoeuvring plan may include, but is not limited to, a candidate path or trajectory for the vehicle, along with associated control parameters (e.g., speed, acceleration, steering inputs) and timing information. This plan may further account for constraints imposed by the current state of the vehicle and the surrounding environment, ensuring the vehicle's movement is safe, efficient, and aligned with the overall objectives of the automated driving system.

As used herein, the term "driving task" refers to the collection of operations, decisions, and responsibilities required to operate a vehicle safely and lawfully in real-world conditions. This encompasses actions such as controlling the vehicle's speed, direction, and trajectory, monitoring traffic and road conditions, responding to signals and obstacles, and ensuring compliance with relevant regulations.

As used herein, the term "driving policy" may be understood as a set of rules, constraints, or decision-making guidelines that govern how an automated driving system interprets and responds to traffic conditions, roadway features, and other external factors. The driving policy may specify, for example, speed limits, right-of-way determinations, lane-change strategies, and interactions with other road users, thereby unifying safety, regulatory, and operational considerations into a coherent framework for controlling the vehicle's behaviour. In reference to the above example with a nominal planner and a safety planner, the driving policy can be used to decide whether to execute the plan as output by the nominal planner or as output by the safety planner. Or more generally, if there are several candidate paths or trajectories available for selection by the acting subsystem, where the candidate paths or trajectories vary in terms of how conservative they are, the driving policy may dictate which one is chosen. For example, a cautious/conservative driving policy would result in a selection of the most conservative candidate path/trajectory while a more permissive driving policy would result in a selection of the most permissive candidate path/trajectory.

As used herein, a "static assumption" may be understood as an assumption regarding an environmental or operational condition that is determined or verified during a design-time or configuration phase of the automated driving system. A static assumption remains substantially unchanged or is considered invariant for the purposes of planning and control throughout the vehicle's operation. For instance, static assumptions may include fixed roadway attributes (e.g., lane geometry or traffic sign locations), predetermined vehicle system limitations, or any other condition that is expected to remain constant over the relevant timeframe.

Examples of static assumptions include road geometry and layout (assumption that the physical dimensions of the road, such as lane boundaries, curve radii, or maximum slope, conform to a design-time verified map or standard), infrastructure and traffic control (assumption that traffic lights, signs, and lane markings exist in specified locations and operate within standard parameters), vehicle system capabilities (assumptions about the capabilities and limitations of the host vehicle's hardware and software, such as, sensor field-of-view, maximum braking force, or controller latencies), and applicable traffic rules (assumptions about road regulations, speed limits, turning rules, or right-of-way conventions that are valid in the operating region). Because these assumptions are determined and validated during the development or commissioning phase, and are not expected to change or only change rarely, they can be regarded as "static".

As used herein, a "dynamic assumption" may be understood as an assumption about a condition or factor that evolves over time and is subject to continuous or periodic update during the vehicle's operation. Such assumptions are derived, at least in part, from real-time or predictive data relating to the behaviour of other traffic participants, potential hazards arising from occluded areas, or any transient environmental changes that may influence the host vehicle's path planning or decision-making processes.

Examples of dynamic assumptions include predicted behaviour of other road users (assumptions about how surrounding vehicles, pedestrians, or cyclists will accelerate, decelerate, maintain lanes, or yield at intersections), occlusions and unobserved areas (assumptions about potential hazards in regions occluded from direct sensor observation, such as, a pedestrian might emerge from behind a parked vehicle), time-varying traffic conditions (assumptions about short-term fluctuations in traffic density, queue formation at intersections, or merging behaviour on highways), and evolving environmental conditions (assumptions about near-term weather changes (e.g., sudden rain or fog) that might affect traction or sensor performance, or about construction zones appearing unexpectedly). These assumptions, while they may be defined and modelled during design-time, rely on real-time or near-real-time data from sensors and predictions, hence they are referred to as "dynamic".

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

As used herein, the term "in response to" may be construed to mean "when or "upon" or "if" depending on the context. Similarly, the phrase "in response to determining" or "if it is determined' or "when it is determined" or "in an instance of" may be construed to mean "upon determining" or "upon detecting and identifying occurrence of an event" or "in response to detecting occurrence of an event" depending on the context. Accordingly, the phrase "in response to X being equal to Y" may be construed as "when X equals Y", "if X equals Y", "when it is determined that X equals Y", or "in response to detecting/determining that X equals Y" depending on the context.

### Embodiments

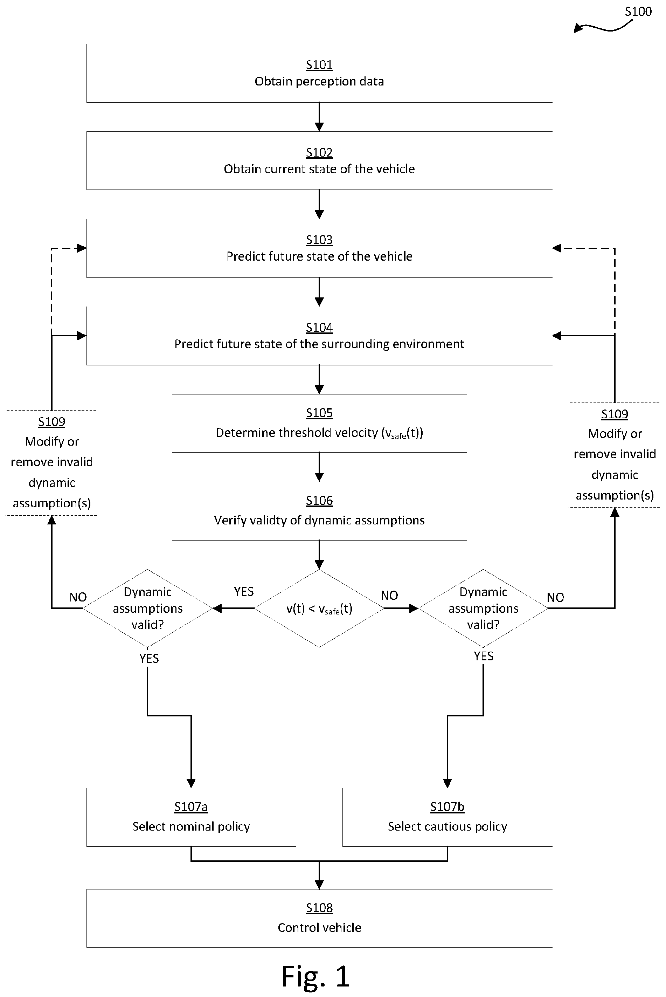

Fig. 1 is a schematic flowchart of a method S100 for planning and executing a driving task for an automated driving system of a vehicle. The method S100 is preferably a computer-implemented method S100, performed by a processing system of the ADS-equipped vehicle. The processing system may for example comprise one or more processors and one or more memories coupled to the one or more processors, wherein the one or more memories store one or more programs that perform the steps, services and functions of the method S100 disclosed herein when executed by the one or more processors.

The method S100 comprises obtaining S101 perception data indicative of a current state of the surrounding environment of the vehicle from a perception system of the vehicle. Accordingly, the perception system of the ADS may provide perception data comprising information about positions, velocities, and classifications of nearby objects (e.g., vehicles, pedestrians), free-space or drivable area estimations, and/or any other relevant road features or obstacles at a current moment in time.

The method S100 further comprises obtaining S102 a current state of the vehicle (i.e., the host vehicle). The current state of the vehicle comprises at least a current pose (i.e., location and heading) of the vehicle and a current velocity of the vehicle. However, the current state of the vehicle may further include additional parameters such as acceleration, yaw rate, steering angle, or any other data relevant to characterizing the vehicle's real-time dynamics and control status. The current state of the vehicle may be derived from information output from a Global Navigation Satellite System (GNSS) of the vehicle, such as a Global Position System (GPS), and map data. Also, an Inertial Measurement Unit (IMU) or any other suitable sensory equipment of the vehicle may provide additional data in order to derive the current state of the vehicle.

The method S100 further comprises predicting S103 a future state of the (host) vehicle at a future point in time (tₙ) based on (i) the current state of the vehicle, (ii) the current state of the surrounding environment, and a (iii) manoeuvring plan for executing an upcoming driving task in accordance with a first driving policy (e.g., nominal policy) out of a set of driving policies. In other words, given a nominal plan (e.g., a planned trajectory) and the current states of the host vehicle and the surrounding environment, one can predict a future state of the host vehicle. In more detail, given that the host vehicle's pose at time t₀ (x₀, y₀, θ₀), where x and y denote 2D map coordinates and θ denotes a heading, and given the state of the environment (e.g., a road geometry) as well as a nominally planned trajectory for the vehicle, one can predict that the host vehicle's pose will be (xₙ, yₙ, θₙ) at time tₙ assuming that the nominally planned trajectory has a sufficiently long prediction horizon. In this context, the "first driving policy" may be understood as the nominal or currently set driving policy. The term "a set" may in the present context be interpreted as one or more.

Further, the method S100 comprises predicting S104 a future state of the surrounding environment at the future point in time (tₙ) based on the current state of the surrounding environment, a set of static assumptions of the surrounding environment, and a set of dynamic assumptions of the surrounding environment. As mentioned above, a static assumption remains substantially unchanged or is considered invariant for the purposes of planning and control throughout the vehicle's operation (e.g., an assumption that the road geometry remains unchanged as compared to the map data), whereas dynamic assumption is an assumption about a condition or factor that evolves over time and is subject to continuous or periodic update during the vehicle's operation (e.g., a neighbouring vehicle's speed or the presence/absence of a pedestrian in an occluded area). The predicted S104 future state of the surrounding environment may comprise a predicted future free-space area estimation at the future point in time. Accordingly, both the current state of the surrounding environment and the future state of the surrounding environment may comprise free-space area estimations at different points in time.

The method S100 further comprises determining S105 a threshold velocity (i.e., *v_{safe}*(*t*)) for the vehicle for the upcoming driving task for the ADS based on the current state of the vehicle, the current state of the surrounding environment, the predicted future state of the vehicle at the future point in time, and the predicted future state of the environment at the future point in time. In other words, a safe velocity is determined using the current and predicted states of the host vehicle and the surrounding environment, as for example indicated in (1) above.

Moreover, the method S100 comprises verifying S106 a validity of each of the set of dynamic assumptions used to predict the future state of the surrounding environment based on historical perception data from the perception system of the vehicle and/or based on information received from a remote server. Moreover, each dynamic assumption of the set of dynamic assumptions is assigned a score based on the verification, the assigned score of a dynamic assumption indicating the validity of that dynamic assumption. The score may be a normalized validity score as mentioned in the foregoing where 0 indicates an invalid assumption and 1 indicates a valid assumption. Alternatively, one could use percentages or any other suitable scale as readily understood by the skilled reader.

The method S100 further comprises controlling S108 the vehicle so to execute the upcoming driving task in accordance with a driving policy that is selected S107a, 107b out of the set of driving policies. Here, the driving policy for executing the upcoming driving task is selected in dependence of a current velocity of the vehicle in relation to the determined threshold velocity and in dependence of the validity of the set of dynamic assumptions. In other words, the method S100 may comprise selecting S107a, S107b a driving policy from the set of driving policies in dependence of a current velocity of the vehicle in relation to the determined threshold velocity and in dependence of the verified S106 validity of the set of dynamic assumptions, and controlling S108 the vehicle so to execute the upcoming driving task in accordance with the selected driving policy.

As mentioned, the verification S106 of the dynamic assessments can be seen as a check of whether the predicted future state of the surrounding environment is reasonable, by either checking historical perception data and/or fleet data. For example, if one dynamic assumption is that there is a pedestrian present in every occluded area on the road, this would encompass situations where one would assume that there is a pedestrian lurking in front of a car. Such assumptions have to be made in order to guarantee safety for Vulnerable Road Users (VRUs) as this may very well be the situation if the car is stationary (e.g., a parked car on a busy street), but it is unlikely to be the case if the car is traveling at high speed in an adjacent lane. Thus, in the latter case the verification S106 process may deem the assumption to be invalid (e.g., using historical measurements of the area in front of speeding vehicles in similar situations) and therefore cause a re-assessment of the predicted future state of the environment albeit with a modified version of that assumption or without that assumption. The new predicted future state of the environment will then lead to a new calculation S105 of the threshold velocity (i.e., *v_{safe}*(*t*)).

Accordingly, if the vehicle's current velocity, v(t) is lower than the threshold velocity, *v_{safe}*(*t*)*,* and all dynamic assumptions are valid, one may select S107a a first driving policy (i.e., nominal policy) as the safety requirements should be fulfilled. However, if the vehicle's current velocity, v(t) is higher than the threshold velocity, *v_{safe}*(*t*), and all dynamic assumptions are valid, then one may select S107b a second driving policy (i.e., cautious policy) that is more risk-averse than the first driving policy. This is because the vehicle is violating the threshold velocity condition while all assumptions used in the calculation of this threshold velocity appear to be valid, thus in order to ensure safety, a more cautious driving policy should be implemented as the nominal driving policy leads to a violation of *v_{safe}*(*t*).

However, if one or more dynamic assumptions are deemed invalid, in either case, then the method S100 may comprise modifying or removing the invalid dynamic assumption(s) and repeating the prediction S104 of the future state of the surrounding environment. Then, a new calculation S105 of the threshold velocity, *v_{safe}*(*t*), can be performed, which can change the outcome of the driving policy selection S107a, S107b.

For example, assuming that the vehicle's current velocity, v(t) is higher than the threshold velocity, *v_{safe}*(*t*)*,* without verification S106 of the dynamic assumptions and the potential the re-assessment of the prediction S104 of the future state of the environment and the re-calculation of the threshold velocity, *v_{safe}*(*t*), one would have to apply S107b the cautious driving policy to ensure safety. However, with the modified or removed invalid dynamic assumptions, the resulting calculation of the threshold velocity, *v_{safe}*(*t*), could result in a higher threshold velocity, *v_{safe}*(*t*), which (assuming that all dynamic assumptions are valid now) will lead to a possibility to apply S107a the nominal driving policy. Thus, by using this process of verifying the dynamic assumptions used in the prediction S104 of the future state of the environment, one can decrease the number of instances where the cautious driving policy is applied unnecessarily and thereby improve the performance of the ADS and overall usability, leading to a better user experience.

Moreover, as indicated in Fig. 1, when a dynamic assumption is deemed invalid, one could also repeat the prediction S103 of the future state of the vehicle, if any dynamic assumptions were used in that prediction S103, in particular if those dynamic assumptions were verified S106 as invalid. Moreover, as readily understood by the skilled artisan, one could also perform the verification S106 of the validity of the dynamic assumptions before determining S105 the threshold velocity, or both processes could be performed in parallel depending on a chosen implementation.

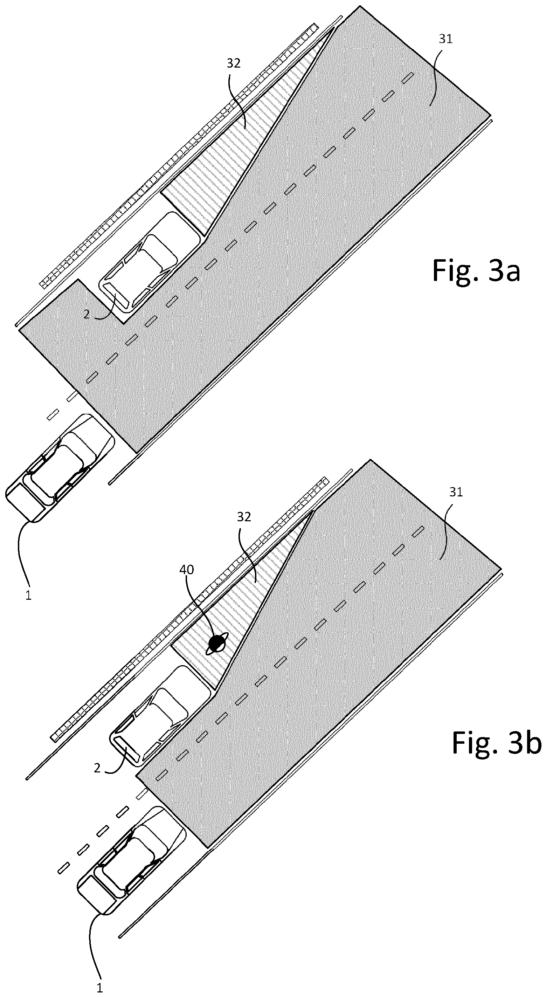

Turning now briefly to Figs. 3a-3c, which depict a series of a schematic top-view illustrations of a temporal evolution of a traffic scenario exemplifying the above described dynamic assumption with a pedestrian 40 being present in an occluded area 32. In Fig. 3a, there is a host vehicle 1 driving in the right lane on a dual-lane highway. Slightly in front of the host vehicle 1, in the adjacent left lane, there is another vehicle 2 traveling in the same direction as the host vehicle 1. The perception data indicative of a current state of the surrounding environment is simplified as a free-space estimation 31. However, as readily understood the current state of the environment may further comprise locations and classifications of various objects in the surrounding environment, such as for example the neighbouring vehicle 2, lane markers, barriers, and so forth. Moreover, in the current state of the environment, an occluded area 32 has been identified in front of the neighbouring vehicle 2.

Fig. 3b illustrates a predicted future state of the surrounding environment at a future point in time based on the current state of the surrounding environment (Fig. 3a), a set of static assumptions of the surrounding environment (e.g., that the road will have two lanes, the barriers will be in the same positions relative to the vehicle, visibility will remain at the same level, etc.), and a set of dynamic assumptions of the surrounding environment. In the depicted example, of Fig. 3b a dynamic assumption is that there is a pedestrian 40 present in the occluded area 32. The reason for having such an assumption in the predicted state of the surrounding environment is to ensure that the ADS can handle any adverse situation should they occur, so one has to design the planning subsystem with such situations (albeit not always probable) in mind. Thus, in order to guarantee safety, a dynamic assumption is made such that a pedestrian 40 is present in the occluded area 32. Now, without verifying this dynamic assumption, the resulting driving policy adapted by the ADS would likely be too conservative as it has to adapt the host vehicle's speed to be able to handle a situation where the potential pedestrian 32 would cross the road in front of the host vehicle 1.

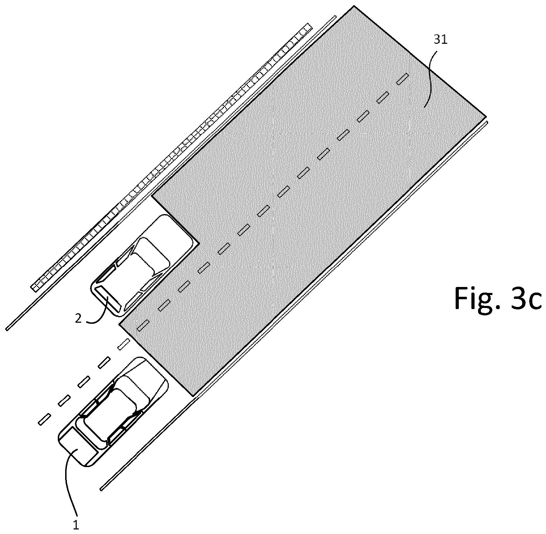

Fig. 3c illustrates the predicted future state of the surrounding environment at a future point in time from Fig. 3b that additionally accounts for the validity of the dynamic assumption. Accordingly, the validity of the dynamic assumption is verified using historical data from previously observed scenes. With the dynamic assumption of pedestrians being present in the occluded area being verified as invalid, the occluded area becomes pedestrian free (i.e., it becomes free-space 31) and a less conservative, but still safe, driving policy can be adopted by the ADS of the host vehicle 1.

Reverting back to Fig. 1, the controlling S108 of the vehicle may comprise, in response to a current velocity of the vehicle being below the determined threshold velocity and each of the set of dynamic assumptions being valid, controlling S108 the vehicle so to execute the upcoming driving task in accordance with the first driving policy out of the set of driving policies. In other words, if the host vehicle's current velocity is below *v_{safe}* and the dynamic assumptions are valid, the ADS can implement S107a the nominal driving policy as the calculation of *v_{safe}* relied on these assumptions being valid.

Further, the controlling S108 of the vehicle may comprise, in response to the current velocity of the vehicle being above the determined threshold velocity and each dynamic assumptions of the set of dynamic assumptions being valid, controlling S108 the vehicle so to execute the upcoming driving task in accordance with a second driving policy out of the set of driving policies, wherein the second driving policy is more risk-averse than the first driving policy. In other words, if the the current velocity of the vehicle is above *v_{safe}* and each of the dynamic assumptions is verified S106 as valid, then a more conservative or cautious driving policy is implemented by the ADS. This is because the threshold defined by the *v_{safe}* is violated under a correct calculation (i.e., with valid assumptions).

Still further, the method S100 may comprise, in response to a current velocity of the vehicle being below the determined threshold velocity and one or more dynamic assumptions of the set of dynamic assumptions being invalid, modifying or removing S109 the one or more invalid dynamic assumptions, and re-predicting the future state of the surrounding environment while accounting for the modified or removed one or more invalid dynamic assumptions. Accordingly, even though the vehicle's current velocity was below the threshold velocity, *v_{safe},* the fact that one or more dynamic assumptions were deemed invalid enforces a re-assessment of the future state of the environment and a re-calculation of the threshold velocity, *v_{safe}.* The benefits of this is two-fold. Firstly, if the re-calculation results in a lower threshold velocity, *v_{safe},* that is lower than the current speed of the vehicle, which is possible albeit unlikely since the dynamic assumptions should by default be conservative, then one effectively avoids a situation where the nominal driving policy was selected S107a while the cautious driving policy should have been selected S107b. Secondly, if the re-calculation of the results in an even higher threshold velocity, *v_{safe},* then one could consider an even more permissive driving policy than the nominal policy assuming that the ADS has such capability.

Moreover, the method S100 may comprise, in response to the current velocity of the vehicle being above the determined threshold velocity and one or more dynamic assumptions of the set of dynamic assumptions being invalid, modifying or removing S109 the one or more invalid dynamic assumptions, and re-predicting the future state of the surrounding environment while accounting for the modified or removed one or more invalid dynamic assumptions. As exemplified above, if the current velocity of the vehicle is above *v_{safe}* while one or more dynamic assumptions are verified S106 as invalid, then one performs a re-assessment of the predicted S104 state of the environment in order to see if *v_{safe}* should have been higher rather than simply enforcing a more cautious driving policy in order to improve performance. In other words, even though the threshold velocity ("safe velocity") is initially violated, one could still be able adopt a more permissive (i.e., less conservative) driving policy since the calculation of the threshold velocity was based on an invalid assumption (too conservative assumption). This scenario was exemplified above with reference to Figs. 3a-3c.

Still further, as discussed in reference to Figs. 3a-3c, the set of dynamic assumptions (used to predict the future state of the environment) may comprise an assumption of a presence of a vulnerable road user (VRU) 40 within an occluded area 32 in the surrounding environment of the vehicle or at an edge of the free-space area estimation 31. In reference to the latter, one could always assume that there is a VRU present just outside of any free-space area (conservative assumption) and the validity of that assumption may depend on the type of boundary defining the edge of the free-space area. For example, if the boundary of free-space is defined by a side-walk or pavement, then that assumption may be valid whereas if the boundary of free-space is defined by a highway barrier or the back-side of a parked vehicle, then that assumption may be invalid as it not likely that a VRU will cross a highway barrier or jump out of the drunk or boot of a parked vehicle.

Thus, the method S100 may further comprise redefining the free-space area estimation based on the assigned scores of the set of dynamic assumptions. Accordingly, with reference to Fig. 3c, the free-space area estimation was redefined so to also encompass the area in front of the neighbouring vehicle 2 that was classified as "occluded", and a more permissive driving policy could be adopted in view of this (for example instead of having to use the cautious driving policy one could be allowed to use the nominal driving policy).

Further, in some embodiments, the controlling S108 of the vehicle so to execute the upcoming driving task in accordance with the driving policy that is selected S107a, S107b out of the set of driving policies comprises controlling S108 the vehicle based on an output from a chosen trajectory planning module of the ADS out of a set of trajectory planning modules, wherein the trajectory planning module is chosen in dependence of the driving policy that is selected S107a, S107b out of the set of driving policies. Accordingly, the ADS may have a set of trajectory planning modules each configured to output candidate trajectories for an upcoming driving task. Here, the planning modules may vary in how conservative their trajectories are in reference to for example velocity, distance to obstacles, steering, etc. Thus, the driving policy selection may impose a selection of a specific trajectory planner's candidate trajectory so that for example, a conservative driving policy will impose a selection of the conservative trajectory planner's candidate trajectory.

Executable instructions for performing these functions are, optionally, included in a non-transitory computer-readable storage medium or other computer program product configured for execution by one or more processors.

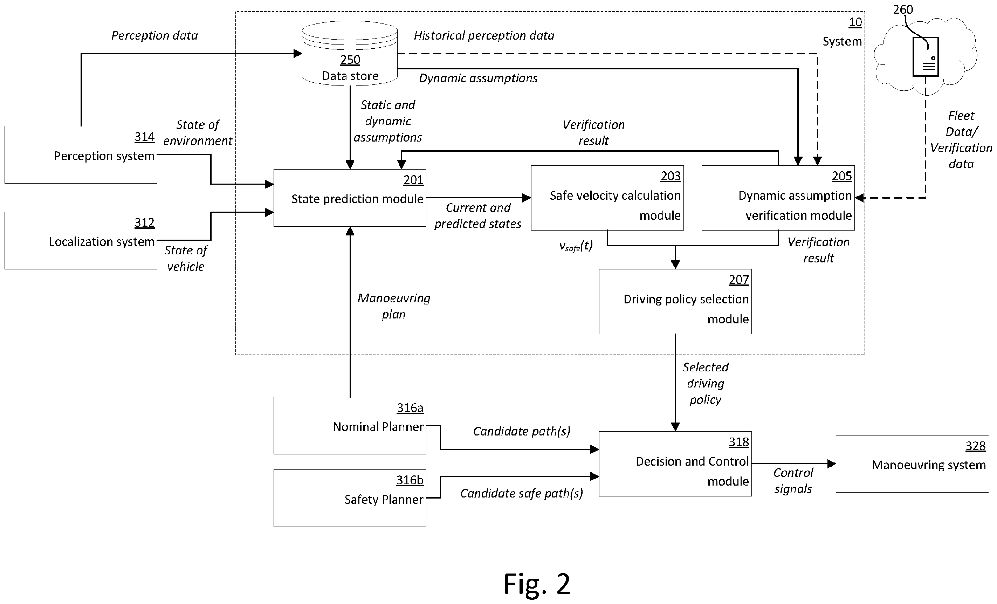

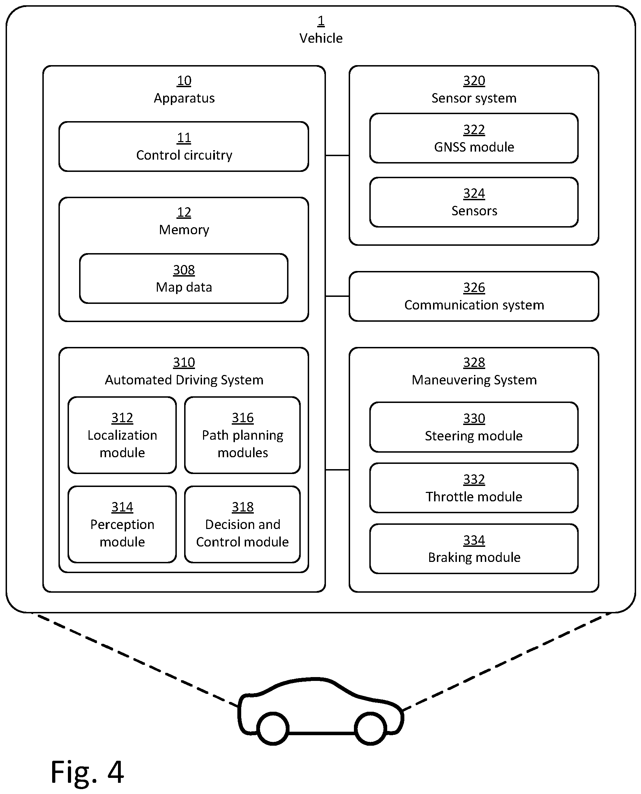

Fig. 2 is a schematic block diagram representation of a system 10 for planning a driving task for an automated driving system (ADS) of a vehicle, in accordance with some embodiments. The system 10 comprises control circuitry (e.g. one or more processors) 11 (see Fig. 4) configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein. However, in order to better elucidate the herein disclosed embodiments, the control circuitry is represented as various "modules" or blocks in Fig. 2, each of them linked to one or more specific functions of the control circuitry. Fig. 2 further illustrates that dataflow between the various modules or blocks in order to facilitate understanding.

Accordingly, the control circuitry 11 is configured to obtain perception data indicative of a current state of the surrounding environment of the vehicle from a perception system 314 of the vehicle, and obtain a current state of the vehicle, where the current state of the vehicle comprising a current pose of the vehicle and a current velocity of the vehicle. The current state of the vehicle may for example be obtained from a localization system 312 of the vehicle. However, as readily understood by the skilled reader, the perception system 314 could be configured to provide the current state of the vehicle in some implementations.

The control circuitry 11 is further configured to predict a future state of the vehicle at a future point in time based on the current state of the vehicle, the current state of the surrounding environment, and a manoeuvring plan for executing an upcoming driving task in accordance with a first driving policy out of a set of driving policies. Accordingly, a state prediction module 201 may be configured to predict a future state of the host vehicle at a future point in time using the on the current state of the vehicle, the current state of the surrounding environment, and a candidate trajectory as output by a nominal planner 316a.

Further, the control circuitry 11 is configured to predict a future state of the surrounding environment at the future point in time based on the current state of the surrounding environment, a set of static assumptions of the surrounding environment, and a set of dynamic assumptions of the surrounding environment. In more detail, the state prediction module 201 may retrieve one or more prediction models that define the set of static assumptions of the surrounding environment and the set of dynamic assumptions from a local datastore 250, and use them to predict a future state of the surrounding environment given the current state of the surrounding environment. The prediction models may either be heuristic (rule-based) models defined during design-time or suitably trained machine learning models (e.g., neural networks).

The control circuitry 11 is further configured to determine a threshold velocity (*v_{safe}*) for the vehicle for the upcoming driving task for the ADS based on the current state of the vehicle, the current state of the surrounding environment, the predicted future state of the vehicle at the future point in time, and the predicted future state of the environment at the future point in time. Accordingly, the system 10 may comprise a safe velocity calculation module 203 that is configured to calculate the safe velocity for the upcoming driving task in accordance with the methodology mentioned in the foregoing.

The control circuitry 11 is further configured to verify a validity of the set of dynamic assumptions used to predict the future state of the surrounding environment based on historical perception data from the perception system 314 of the vehicle and/or based on information received from a remote server 260. Here, each dynamic assumption of the set of dynamic assumptions is assigned a score based on the verification, the assigned score of a dynamic assumption indicating the validity of that dynamic assumption. Accordingly, the system 10 may comprise a dynamic assumption verification module 205 that assess the validity of each dynamic assumption using either historical perception data retrieved from a local data store 250 or using fleet data supplied from a server 260. In some embodiments, the remote server 260 may just be queried to verify the set of dynamic assumption and simply output a verification result that is provided to the system 10.

Further, the control circuitry 11 is configured to control the vehicle so to execute the upcoming driving task in accordance with a driving policy that is selected out of the set of driving policies, wherein the driving policy for executing the upcoming driving task is selected in dependence of a current velocity of the vehicle in relation to the determined threshold velocity and in dependence of the validity of the set of dynamic assumptions. Accordingly, once the threshold velocity ("safe velocity") is determined and the validity of the dynamic assumptions is verified, a driving policy selection module 207 may be configured to output a driving policy to a decision and control module 318 of the ADS of the vehicle, which then selects a suitable candidate trajectory given the selected driving policy. The decision and control module 318 may be continuously provided with candidate trajectories from a set of trajectory planners 316a, 316b and make the appropriate selection of a candidate trajectory given the selected driving policy. Once an appropriate candidate trajectory has been selected, the decision and control module 318 can output control signals to the vehicle's manoeuvring system 328 to cause the vehicle to execute the selected candidate trajectory.

Fig. 4 is a schematic illustration of an ADS-equipped vehicle 1 comprising such a system 10. As used herein, a "vehicle" is any form of motorized transport. For example, the vehicle 1 may be any road vehicle such as a car (as illustrated herein), a motorcycle, a (cargo) truck, a bus, etc.

The system 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the system 10 may form a part of the ADS 310, i.e. the system 10 may be implemented as a module or feature of the ADS. The control circuitry 11 may comprise one or more processors, such as a central processing unit (CPU), a graphics processing unit (GPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 4. Moreover, the vehicle 1 may comprise further elements than those shown in Fig. 4. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 4 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of obtaining perception data and obtaining a current state of the vehicle or the steps of predicting a future state of the vehicle and predicting a future state of the surrounding environment may be interchanged based on a specific realization. Such variation will depend on the software and hardware systems chosen and on designer choice. All such variations are within the scope of the invention. Likewise, software implementations could be accomplished with standard programming techniques with rule-based logic and other logic to accomplish the various obtaining, predicting, determining, verifying, and controlling steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for planning a driving task for an automated driving system, ADS, of a vehicle, the computer-implemented method comprising:
obtaining (S101) perception data indicative of a current state of the surrounding environment of the vehicle from a perception system of the vehicle;
obtaining (S102) a current state of the vehicle, the current state of the vehicle comprising a current pose of the vehicle and a current velocity of the vehicle;
predicting (S103) a future state of the vehicle at a future point in time based on the current state of the vehicle, the current state of the surrounding environment, and a manoeuvring plan for executing an upcoming driving task in accordance with a first driving policy out of a set of driving policies;
predicting (S104) a future state of the surrounding environment at the future point in time based on the current state of the surrounding environment, a set of static assumptions of the surrounding environment, and a set of dynamic assumptions of the surrounding environment;
determining (S105) a threshold velocity for the vehicle for the upcoming driving task for the ADS based on the current state of the vehicle, the current state of the surrounding environment, the predicted future state of the vehicle at the future point in time, and the predicted future state of the environment at the future point in time;
verifying (S106) a validity of the set of dynamic assumptions used to predict the future state of the surrounding environment based on historical perception data from the perception system of the vehicle and/or based on information received from a remote server;
wherein each dynamic assumption of the set of dynamic assumptions is assigned a score based on the verification, the assigned score of a dynamic assumption indicating the validity of that dynamic assumption;
controlling (S108) the vehicle so to execute the upcoming driving task in accordance with a driving policy that is selected (S107a, S107b) out of the set of driving policies, wherein the driving policy for executing the upcoming driving task is selected in dependence of a current velocity of the vehicle in relation to the determined threshold velocity and in dependence of the validity of the set of dynamic assumptions.

2. The computer-implemented method (S100) according to claim 1, wherein the controlling (S108) the vehicle comprises:
in response to a current velocity of the vehicle being below the determined threshold velocity and each of the set of dynamic assumptions being valid:
controlling (S108) the vehicle so to execute the upcoming driving task in accordance with the first driving policy out of the set of driving policies;
in response to the current velocity of the vehicle being above the determined threshold velocity and each dynamic assumption of the set of dynamic assumptions being valid:
controlling (S108) the vehicle so to execute the upcoming driving task in accordance with a second driving policy out of the set of driving policies, wherein the second driving policy is more risk-averse than the first driving policy.

3. The computer-implemented method (S100) according to claim 1 or 2, wherein the method (S100) comprises:
in response to a current velocity of the vehicle being below the determined threshold velocity and one or more dynamic assumptions of the set of dynamic assumptions being invalid:
modifying or removing the one or more invalid dynamic assumptions, and
re-predicting the future state of the surrounding environment while accounting for the modified or removed one or more invalid dynamic assumptions;
in response to the current velocity of the vehicle being above the determined threshold velocity and one or more dynamic assumptions of the set of dynamic assumptions being invalid:
modifying or removing the one or more invalid dynamic assumptions, and
re-predicting the future state of the surrounding environment while accounting for the modified or removed one or more invalid dynamic assumptions.

4. The computer-implemented method (S100) according to any one of claims 1-3, wherein the state of the surrounding environment of the vehicle comprises:
a free-space area estimation within the surrounding environment of the vehicle.

5. The computer-implemented method (S100) according to claim 4, wherein the set of dynamic assumptions comprises an assumption of a presence of a vulnerable road user (VRU) within an occluded area in the surrounding environment of the vehicle or at an edge of the free-space area estimation; and
wherein the computer-implemented method further comprises:
in response to the assumption of a presence of a VRU within an occluded area in the surrounding environment of the vehicle or at an edge of the free-space area estimation being invalid:
redefining the free-space area estimation based on the assigned scores of the set of dynamic assumptions.

6. The computer-implemented method (S100) according to any one of claims 1-5, wherein controlling (S108) the vehicle so to execute the upcoming driving task in accordance with the driving policy that is selected out of the set of driving policies comprises: controlling (S108) the vehicle based on an output from a chosen trajectory planning module of the ADS out of a set of trajectory planning modules, wherein the trajectory planning module is chosen in dependence of the driving policy that is selected out of the set of driving policies.

7. A computer program product comprising instructions which, when the program is executed by a computing device of a vehicle, causes the computing device to carry out the method (S108) according to any one of claims 1-6.

8. A computer-readable storage medium comprising instructions which, when executed by a computing device of a vehicle, causes the computing device to carry out the method (S108) according to any one of claims 1-6.

9. A system (10) for planning a driving task for an automated driving system, ADS, (310) of a vehicle (1), the system comprising one or more processors (11) and one or more memory storage areas (12) comprising program code, the one or more memory storage areas and the program code being configured to, with the one or more processors, cause the system (10) to at least:
obtain perception data indicative of a current state of the surrounding environment of the vehicle from a perception system (314) of the vehicle;
obtain a current state of the vehicle (1), the current state of the vehicle comprising a current pose of the vehicle and a current velocity of the vehicle;
predict a future state of the vehicle at a future point in time based on the current state of the vehicle (1), the current state of the surrounding environment, and a manoeuvring plan for executing an upcoming driving task in accordance with a first driving policy out of a set of driving policies;
predict a future state of the surrounding environment at the future point in time based on the current state of the surrounding environment, a set of static assumptions of the surrounding environment, and a set of dynamic assumptions of the surrounding environment;
determine a threshold velocity for the vehicle (1) for the upcoming driving task for the ADS (310) based on the current state of the vehicle (1), the current state of the surrounding environment, the predicted future state of the vehicle at the future point in time, and the predicted future state of the environment at the future point in time;
verify a validity of the set of dynamic assumptions used to predict the future state of the surrounding environment based on historical perception data from the perception system (314) of the vehicle (1) and/or based on information received from a remote server (260);
wherein each dynamic assumption of the set of dynamic assumptions is assigned a score based on the verification, the assigned score of a dynamic assumption indicating the validity of that dynamic assumption;
control the vehicle (1) so to execute the upcoming driving task in accordance with a driving policy that is selected out of the set of driving policies, wherein the driving policy for executing the upcoming driving task is selected in dependence of a current velocity of the vehicle in relation to the determined threshold velocity and in dependence of the validity of the set of dynamic assumptions.

10. The system (1) according to claim 9, wherein controlling the vehicle (1) comprises:
in response to a current velocity of the vehicle being below the determined threshold velocity and each of the set of dynamic assumptions being valid:
control the vehicle (1) so to execute the upcoming driving task in accordance with the first driving policy out of the set of driving policies;
in response to the current velocity of the vehicle being above the determined threshold velocity and each dynamic assumption of the set of dynamic assumptions being valid:
control the vehicle (1) so to execute the upcoming driving task in accordance with a second driving policy out of the set of driving policies, wherein the second driving policy is more risk-averse than the first driving policy.

11. The system (10) according to claim 9, wherein the controlling the vehicle (1) comprises:
in response to a current velocity of the vehicle (1) being below the determined threshold velocity and one or more dynamic assumptions of the set of dynamic assumptions being invalid:
modifying or removing the one or more invalid dynamic assumptions, and
re-predicting the future state of the surrounding environment while accounting for the modified or removed one or more invalid dynamic assumptions;
in response to the current velocity of the vehicle (1) being above the determined threshold velocity and one or more dynamic assumptions of the set of dynamic assumptions being invalid:
modifying or removing the one or more invalid dynamic assumptions, and
re-predicting the future state of the surrounding environment while accounting for the modified or removed one or more invalid dynamic assumptions.

12. The system (10) according to any one of claims 9-11, wherein the state of the surrounding environment of the vehicle (1) comprises:
a free-space area estimation (31) within the surrounding environment of the vehicle (1).

13. The system (10) according to claim 12, wherein the set of dynamic assumptions comprises an assumption of a presence of a vulnerable road user, VRU, (40) within an occluded area (21) in the surrounding environment of the vehicle (1) or at an edge of the free-space area estimation (31); and
wherein the one or more memory storage areas and the program code are configured to, with the one or more processors, cause the system (10) to at least:
in response to the assumption of a presence of a VRU within an occluded area in the surrounding environment of the vehicle or at an edge of the free-space area estimation being invalid:
redefine the free-space area estimation (31) based on the assigned scores of the set of dynamic assumptions.

14. The system (10) according to any one of claims 9-13, wherein controlling the vehicle (1) so to execute the upcoming driving task in accordance with the driving policy that is selected out of the set of driving policies comprises:
control the vehicle (1) based on an output from a chosen trajectory planning module (316, 316a, 316b) of the ADS (310) out of a set of trajectory planning modules (316, 316a, 316b), wherein the trajectory planning module is chosen in dependence of the driving policy that is selected out of the set of driving policies.

15. A vehicle (1) comprising a system (10) according to any one of claims 9-14.
